Europäisches Patentamt

European Patent Office

Office européen des brevets

(19)

(11) Veröffentlichungsnummer: **0 005 488**
**B1**

(12) # EUROPÄISCHE PATENTSCHRIFT

(45) Veröffentlichungstag der Patentschrift:
06.01.82

(21) Anmeldenummer: **79101372.5**

(22) Anmeldetag: **04.05.79**

(51) Int. Cl.³: **H 04 L 13/08**, G 06 F 3/02,
B 41 J 5/30

(54) Schaltungsanordnung zum Entsperren eines Tastaturspeichers in Fern- oder Datenschreibmaschinen.

(30) Priorität: **11.05.78 DE 2820673**

(43) Veröffentlichungstag der Anmeldung:
**28.11.79 Patentblatt 79/24**

(45) Bekanntmachung des Hinweises auf die Patenterteilung:
**06.01.82 Patentblatt 82/1**

(84) Benannte Vertragsstaaten:
**CH FR GB IT NL SE**

(56) Entgegenhaltungen:
**DE-B-2 556 903**
**DE-B-2 820 673**
**GB-A-1 259 089**
**US-A-3 952 289**
**IBM TECHNICAL DISCLOSURE BULLETIN,**
**Vol. 17, Nr. 5, Oktober 1974,**
**New York, USA,**
**DUGGAN: »Keybord overrun control«,**
**Seiten 1453 – 1454**

(73) Patentinhaber: **SIEMENS AKTIENGESELLSCHAFT Berlin**
**und München, Postfach 22 02 61, D-8000 München 22 (DE)**

(72) Erfinder: **Günther, Gerd-Joachim, Gailenreuther**
**Strasse 19, D-8000 München 60 (DE)**

## Schaltungsanordnung zum Entsperren eines Tastaturspeichers
## in Fern- oder Datenschreibmaschinen

Die Erfindung bezieht sich auf eine Schaltungsanordnung zum Entsperren eines Tastaturspeichers in Fern- oder Datenschreibmaschinen, bei der ein nach der Füllung des Tastaturspeichers gesetztes Flipflop ein die Eingabe von Zeichen in den Tastaturspeicher verhinderndes Sperrsignal erzeugt, bei der eine Entsperrtaste nach ihrer Betätigung ein die Eingabe von weiteren Zeichen in den Tastaturspeicher ermöglichendes Entsperrsignal erzeugt und bei der ein UND-Glied vorgesehen ist, an dessen erstem Eingang ein dem Entsperrsignal zugeordnetes Signal anliegt, an dessen zweitem Eingang ein bei der Leerung des Tastaturspeichers erzeugtes Signal anliegt und das ein das Flipflop zurücksetzendes Signal erzeugt.

Aus der DE-B-2 556 903 ist eine Schaltungsanordnung zum Entsperren eines Tastaturspeichers in Fern- oder Datenschreibmaschinen bekannt. Bei dieser bekannten Schaltungsanordnung wird zur Vermeidung des Verlustes von in den Tastaturspeicher eingegebenen Zeichen bei vollständig gefülltem Tastaturspeicher eine Eingabe von weiteren Zeichen mittels einer Sperrvorrichtung gesperrt. Gleichzeitig zeigt die Sperrvorrichtung an, daß der Tastaturspeicher gefüllt ist. Die Schaltungsanordnung enthält eine Entsperrtaste, die bei einem mindestens teilweise geleerten Tastaturspeicher betätigt werden muß, um weitere Zeichen in den Tastaturspeicher eingeben zu können. Weiterhin enthält die Schaltungsanordnung ein Flipflop, das nach der Füllung des Tastaturspeichers gesetzt wird und dann ein Sperrsignal erzeugt, das die Eingabe von weiteren Zeichen in den Tastaturspeicher verhindert. Dem Rücksetzeingang des Flipflops ist ein UND-Glied vorgeschaltet, an dessen erstem Eingang ein von der Entsperrtaste abgegebenes Signal anliegt und an dessen zweitem Eingang ein die teilweise Leerung des Tastaturspeichers kennzeichnendes Signal anliegt.

Bei dieser bekannten Schaltungsanordnung muß die Bedienperson nach der vollständigen Füllung des Tastaturspeichers mit der Betätigung der Entsperrtaste jeweils solange warten, bis der Tastaturspeicher mindestens teilweise entleert ist, da erst dann ein von der Entsperrtaste abgegebenes Entsperrsignal wirksam wird. Falls die Entsperrtaste bereits dann betätigt wird, wenn erst wenige Zeichen aus dem Tastaturspeicher ausgelesen wurden, kann der Fall eintreten, daß er sehr schnell wieder gefüllt ist und die Entsperrtaste erneut betätigt werden muß. Diese Eigenschaften der bekannten Schaltungsanordnung können von Bedienpersonen als lästig empfunden werden.

Die US-A-3 952 289 offenbart eine Schaltungsanordnung, bei der ein Tastaturspeicher nach seiner Füllung gesperrt wird. Bei dieser bekannten Schaltungsanordnung wird der Tastaturspeicher automatisch entsperrt, sobald er vollständig entleert wurde. Eine Entsperrtaste ist bei dieser bekannten Schaltungsanordnung nicht vorgesehen, so daß die Gefahr besteht, daß bei der Eingabe Zeichen verlorengehen, wenn eine Bedienperson, beispielsweise beim Abschreiben einer Vorlage die das Füllen des Tastaturspeichers anzeigende Anzeigevorrichtung nicht erkennt.

Der Erfindung liegt daher die Aufgabe zugrunde, eine Schaltungsanordnung zum Entsperren eines Tastaturspeichers anzugeben, mit der die Bedienfreundlichkeit von mit einem Tastaturspeicher versehenen Fern- oder Datenschreibmaschinen weiter verbessert wird.

Erfindungsgemäß wird die Aufgabe bei der Schaltungsanordnung der eingangs genannten Art dadurch gelöst, daß dem ersten Eingang des UND-Glieds ein weiteres Flipflop vorgeschaltet ist, an dessen Setzeingang das Entsperrsignal anliegt und an dessen Rücksetzeingang ein nach der vollständigen Leerung des Tastaturspeichers erzeugtes Signal anliegt.

Die Schaltungsanordnung gemäß der vorliegenden Erfindung hat den Vorteil, daß die Entsperrtaste nach dem Füllen des Tastaturspeichers zu einem beliebigen Zeitpunkt betätigt werden kann. Da die Eingabe von weiteren Zeichen erst dann freigegeben wird, wenn der Tastaturspeicher vollständig entleert ist, ist sichergestellt, daß der Tastaturspeicher nicht bereits schon nach wenigen eingegebenen Zeichen wieder gefüllt ist.

Um zu verhindern, daß die Entsperrtaste wirksam wird, bevor nach der Füllung des Tastaturspeichers das Sperrsignal auftritt, ist es vorteilhaft, wenn dem Setzeingang des weiteren Flipflops ein weiteres UND-Signal vorgeschaltet ist, das das Sperrsignal mit dem Entsperrsignal verknüpft.

Falls der Tastaturspeicher bei gedrückt gehaltener Entsperrtaste vollgeschrieben wird, ist die Betätigung der Entsperrtaste unwirksam, wenn der Entsperrtaste ein Zeitglied nachgeschaltet ist, das zu Beginn der Betätigung der Entsperrtaste ein impulsförmiges Entsperrsignal erzeugt.

Um sicherzustellen, daß das weitere Flipflop erst dann zurückgesetzt wird, wenn es an seinem Ausgang ein Signal abgegeben hat, ist es von Vorteil, wenn dem Rücksetzeingang des weiteren Flipflops ein Zeitglied vorgeschaltet ist, das das nach der Leerung des Tastaturspeichers erzeugte Signal um eine vorgegebene Zeitdauer verzögert. Um das Flipflop nach der vollständigen Leerung des Tastaturspeichers mittels der Entsperrtaste auf einfache Weise zurücksetzen zu können, ist es vorteilhaft, wenn das weitere Flipflop aus zwei NOR-Gliedern gebildet wird, daß der Ausgang jedes NOR-Glieds mit einem Eingang des jeweils anderen NOR-Glieds verbunden ist und daß jeweils einem weiteren Eingang jedes NOR-Glieds das Entsperrsignal bzw. das nach der vollständigen Leerung des Tastaturspeichers erzeugte Signal anliegt.

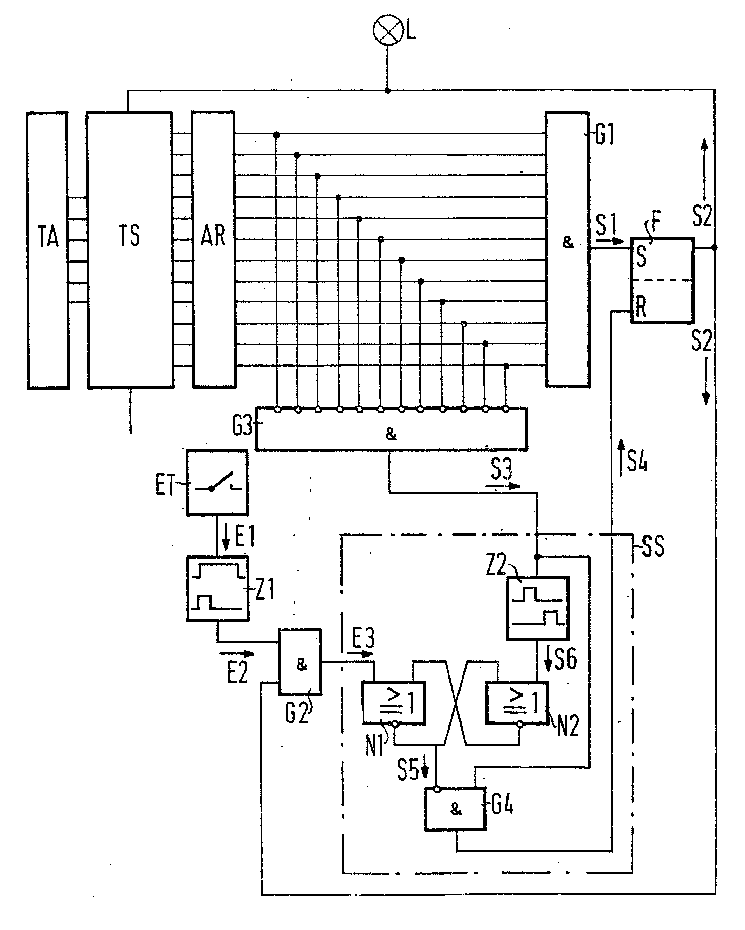

Im folgenden wird ein nach den Merkmalen der Erfindung ausgestaltetes Ausführungsbeispiel anhand der Zeichnung näher beschrieben.

Bei der in der Figur dargestellten Schaltungsanordnung werden Zeichen mit Hilfe einer Tastatur TA als aus sechs Bits bestehende Codezeichen zu einem Tastaturspeicher TS abgegeben. In dem Tastaturspeicher TS sind bis zu zwölf Codezeichen speicherbar. Er dient dazu, die Codezeichen von schnell eingegebenen Zeichen zwischenzuspeichern, um sie dann gleichmäßig in vorgeschriebener Geschwindigkeit auszusenden. Parallel zu dem Tastaturspeicher TS ist ein Ablaufregister AR vorgesehen, das aus einer Kette von Flipflops besteht. Jedes Flipflop ist einem ein Codezeichen im Tastaturspeicher TS aufnehmenden Speicherraum zugeordnet. Wenn der Speicherraum besetzt ist, ist das entsprechende Flipflop im Ablaufregister AR gesetzt.

Wenn der Tastaturspeicher TS vollständig mit Codezeichen gefüllt ist und damit alle Flipflops im Ablaufregister AR gesetzt sind, gibt ein UND-Glied G1, desen Eingänge mit den Ausgängen der Flipflops im Ablaufregister AR verbunden sind, ein Signal S1 ab, das ein Flipflop F setzt. Das Flipflop F gibt an seinem Ausgang ein Sperrsignal S2 ab, das einerseits einer Warnvorrichtung L und andererseits dem Tastaturspeicher TS zugeführt wird. Die Warnvorrichtung L ist beispielsweise als Glühlampe ausgebildet und zeigt einer Bedienperson die vollständige Füllung des Tastaturspeichers TS an. Der Tastaturspeicher TS wird durch das Sperrsignal S2 für eine Eingabe von weiteren Zeichen gesperrt. Das Sperrsignal S2 kann auch der Tastatur TA zugeführt werden, um diese zu sperren.

Das Sperrsignal S2 liegt auch am ersten Eingang eines UND-Glieds G2 an, dessen zweiter Eingang über ein Zeitglied Z1 mit einer Entsperrtaste ET verbunden ist und dessen Ausgang mit einer Schaltstufe SS verbunden ist.

Eine Eingabe von weiteren Zeichen wird erst dann ermöglicht, wenn die Sperrung des Tastaturspeichers TS aufgehoben wird. Zu diesem Zweck betätigt die Bedienperson die Entsperrtaste ET, die ein Entsperrsignal E1 erzeugt. Das Entsperrsignal E1 liegt am Zeitglied Z1 an, das beispielsweise als monostabile Kippstufe ausgebildet ist und das bei dem Auftreten des Entsperrsignals E1 ein impulsförmiges Entsperrsignal E2 erzeugt, das dem UND-Glied G2 zugeführt wird. Bei gefülltem Tastaturspeicher TS ist das Sperrsignal S2 vorhanden und das UND-Glied G2 gibt ein dem Entsperrsignal E2 zugeordnetes Entsperrsignal E3 an die Schaltstufe SS ab. Die Schaltstufe SS enthält ein aus zwei NOR-Gliedern N1 und N2 gebildetes Flipflop, das durch das Entsperrsignal E3 gesetzt wird und das ein Signal S5 an einem invertierenden Eingang eines UND-Glieds G4 abgibt.

Wenn der Tastaturspeicher TS geleert ist und alle Flipflops im Ablaufregister AR zurückgesetzt sind, gibt ein mit invertierenden Eingängen versehenes UND-Glied G3 an seinem Ausgang ein Signal S3 an die Schaltstufe SS ab. Wenn das Flipflop in der Schaltstufe SS gesetzt ist, wird das Signal S3 über das UND-Glied G4 zum Ausgang der Schaltstufe durchgeschaltet und dort als Signal S4 abgegeben, das das Flipflop F zurücksetzt. Mit dem Zurücksetzen des Flipflops F wird das Sperrsignal S2 beendet. Damit wird auch das Leuchten der Warnvorrichtung L beendet und der Tastaturspeicher TS wird für eine Eingabe von weiteren Zeichen freigegeben. Außerdem wird das UND-Glied G2 gesperrt.

Die Schaltstufe SS enthält ein Zeitglied Z2, das das Signal S3 um eine vorgegebene Zeitdauer verzögert. Das Zeitglied Z2 gibt an seinem Ausgang ein Signal S6 ab, das das Flipflop in der Schaltstufe SS zurücksetzt. Die Verzögerungszeit des Zeitglieds Z2 ist so bemessen, daß das Flipflop erst dann zurückgesetzt wird, wenn das Signal S4 sicher abgegeben wurde.

Falls die Entsperrtaste ET betätigt wird, bevor der Tastaturspeicher TS vollständig gefüllt ist, bleibt die Betätigung unwirksam, da das Sperrsignal S2 nicht vorhanden ist und damit das UND-Glied G2 kein Entsperrsignal E3 abgibt. Auch wenn die Entsperrtaste ET solange gedrückt gehalten wird, bis der Tastaturspeicher TS vollständig gefüllt ist, wird das Flipflop in der Schaltstufe SS nicht gesetzt, da das Zeitglied Z1 nur zu Beginn der Betätigung der Entsperrtaste ET ein impulsförmiges Entsperrsignal E2 abgibt. Zum Entsperren des Tastaturspeichers TS, nach dessen vollständiger Füllung, muß die Entsperrtaste ET zunächst losgelassen und dann erneut gedrückt werden. Erst dann wird über das UND-Glied G2 ein Entsperrsignal E3 an die Schaltstufe SS abgegeben.

Falls die Entsperrtaste ET erst nach vollständiger Leerung des Tastaturspeichers TS betätigt wird, gibt das Flipflop in der Schaltstufe SS ein Signal S5 ab, obwohl das das Flipflop zurücksetzende Signal S6 vorhanden ist. Dies wird durch den Aufbau des Flipflops aus den beiden NOR-Gliedern N1 und N2 erreicht, da das NOR-Glied N1 in jedem Fall ein Signal S5 abgibt, wenn das Entsperrsignal E2 auftritt.

**Patentansprüche**

1. Schaltungsanordnung zum Entsperren eines Tastaturspeichers (TS) in Fern- oder Datenschreibmaschinen, bei der ein nach der Füllung des Tastaturspeichers gesetztes Flipflop (F) ein die Eingabe von Zeichen in den Tastaturspeicher verhinderndes Sperrsignal (S2) erzeugt, bei der eine Entsperrtaste (ET) nach ihrer Betätigung ein die Eingabe von weiteren Zeichen in den Tastaturspeicher ermöglichendes Entsperrsignal (E3) erzeugt und bei der ein UND-Glied (G4) vorgesehen ist, an dessen erstem Eingang ein dem Entsperrsignal zugeordnetes Signal (S5) anliegt, an dessen zweitem Eingang ein bei der Leerung des Tastaturspeichers erzeugtes Signal (S3) anliegt und das ein das Flipflop zurücksetzendes Signal (S4) erzeugt, dadurch gekennzeichnet, daß dem ersten Eingang des UND-Glieds (G4) ein weiteres Flipflop (N1, N2) vorgeschaltet ist, an dessen Setzeingang das Entsperrsignal (E3) anliegt und an dessen Rücksetzeingang ein nach der vollständigen Leerung des Tastaturspeichers (TS) erzeugtes Signal (S3) anliegt.

2. Schaltungsanordnung nach Anspruch 1, dadurch gekennzeichnet, daß dem Setzeingang des weiteren Flipflops (N1, N2) ein weiteres UND-Glied (G2) vorgeschaltet ist, das das Sperrsignal (S2) mit dem Entsperrsignal (E2) verknüpft.

3. Schaltungsanordnung nach Anspruch 1 oder Anspruch 2, dadurch gekennzeichnet, daß der Entsperrtaste (ET) ein Zeitglied (Z1) nachgeschaltet ist, das zu Beginn der Betätigung der Entsperrtaste (ET) ein impulsförmiges Entsperrsignal (E2) erzeugt.

4. Schaltungsanordnung nach einem der Ansprüche 1 bis 3, dadurch gekennzeichnet, daß dem Rücksetzeingang des weiteren Flipflops (N1, N2) ein weiteres Zeitglied (Z2) vorgeschaltet ist, das das nach der Leerung des Tastaturspeichers (TS) erzeugte Signal um eine vorgegebene Zeitdauer verzögert.

5. Schaltungsanordnung nach einem der Ansprüche 1 bis 4, dadurch gekennzeichnet, daß das weitere Flipflop (N1, N2) aus zwei NOR-Gliedern (N1, N2) gebildet wird, daß der Ausgang jedes NOR-Glieds (N1, N2) mit einem Eingang des jeweils anderen NOR-Glieds verbunden ist und daß jeweils einem weiteren Eingang jedes NOR-Glieds das Entsperrsignal (E3) bzw. das nach der vollständigen Leerung des Tastaturspeichers (TS) erzeugte Signal (S3) anliegt.

## Claims

1. Circuit arrangement for unlocking a keyboard store (TS) in teleprinters or dataprinters, wherein a flip-flop (F) which is set following the filling of the keyboard store (TS) produces a locking signal (S2) which prevents the input of characters into the keyboard store (TS), and wherein following its actuation, an unlocking key (ET) produces an unlocking signal (E3) which allows the input of further characters into the keyboard store (TS), and wherein an AND-element (G4) is provided at whose first input is connected a signal (S5) assigned to the unlocking signal (E3) and at whose second input is connected a signal (S3) produced during the emptying of the keyboard store (TS), and which produces a signal (S4) which resets the flip-flop (F), characterised in that the first input of the AND-element (G4) is preceded by a further flip-flop (N1, N2), at whose setting input is connected the unlocking signal (E3) and at whose resetting input is connected a signal (S3) produced after the entire emptying of the keyboard store (TS).

2. Circuit arrangement as claimed in claim 1, characterised in that the setting input of the further flip-flop (N1, N2) is preceded by a further AND-element (G2) which links the locking signal (S2) to the unlocking signal (E2).

3. Circuit arrangement as claimed in claim 1 or claim 2, characterised in that the unlocking key (ET) is followed by a time element (Z1) which produces a pulse-shaped unlocking signal (E2) at the beginning of the actuation of the unlocking key (ET).

4. Circuit arrangement as claimed in one of the claims 1 to 3, characterised in that the resetting input of the further flip-flop (N1, N2) is preceded by a further time element (Z2) which delays the signal produced after the emptying of the keyboard store (TS) by a predetermined period of time.

5. Circuit arrangement as claimed in one of the claims 1 to 4, characterised in that the further flip-flop (N1, N2) is formed from two NOR-elements (N1, N2), that the output of each NOR-element (N1, N2) is connected to an input of the particular other NOR-element and that a further input of each NOR-element is connected respectively to the unlocking signal (E3) and to the signal which is produced after the entire emptying of the keyboard store (TS).

## Revendications

1. Montage pour déverrouiller une mémoire (TS) des touches d'un clavier dans les télescriptrices ou imprimantes de données, du type dans lequel un multivibrateur bistable (F) activé ou commandé dans son état supérieur après remplissage de cette mémoire (TS), produit un signal de blocage ou de verrouillage (S2) empêchant l'introduction de signes dans cette dernière, dans lequel une touche de suppression du blocage (ET) produit, après avoir été actionnée, un signal de suppression du blocage (E3) autorisant l'introduction d'autres signes dans ladite mémoire des touches (TS), et dans lequel un circuit ET (G4) est prévu à la première entrée duquel est présent un signal (S5) associé au signal de suppression du blocage (E3), à la seconde entrée duquel est présent un signal (S3) produit lorsque ladite mémoire des touches (TS) a été vidée et qui produit un signal (S4) ramenant ledit multivibrateur bistable (F) dans son état initial, caractérisé par le fait qu'en amont de la première entrée du circuit ET (G4) est monté un second multivibrateur bistable (N1, N2) à l'entrée d'activation duquel est appliqué le signal de suppression de blocage (E3) et qu'à son entrée de remise à l'état initial est appliqué un signal (S3) produit après que la mémoire des touches (TS) ait été complètement vidée.

2. Montage selon la revendication 1, caractérisé par le fait qu'en amont de l'entrée d'activation du second multivibrateur bistable (N1, N2) est monté un second circuit ET (G2) qui combine logiquement le signal de verrouillage (S2) avec le signal de déverrouillage (E2).

3. Montage selon la revendication 1 ou selon la revendication 2, caractérisé par le fait qu'en aval de la touche de déverrouillage (ET) est monté un dispositif ou circuit de temporisation (Z1) qui, au début de l'actionnement de la touche de déverrouillage (ET), fournit un signal de déverrouillage (E2) de forme impulsionnelle.

4. Montage selon l'une des revendications 1 à 3, caractérisé par le fait qu'en amont de l'entrée de remise à l'état initial du second multivibrateur bistable (N1, N2) est monté un second dispositif ou circuit de temporisation (Z2) qui retarde d'une certaine durée le signal produit après que soit vidée la mémoire des touches (TS).

5. Montage selon l'une des revendications 1 à 4, caractérisé par le fait que le second multivibrateur bistable (N1, N2) est constitué par deux circuits NI (N1, N2), que la sortie de chacun des circuits NI (N1, N2) est relié avec une entrée de l'autre circuit NI et qu'à une autre entrée de chacun des circuits NI est appliqué le signal de déverrouillage (E3) ou le signal qui est fourni après que la mémoire des touches (TS) ait été complètement vidée.